# EUROPEAN PATENT APPLICATION

(11) **EP 0 596 247 A2**
(43) Date of publication of application: **11.05.1994**
(21) Application number: 93115775.4
(22) Date of filing: 30.09.1993
(51) Int. Cl.: G06F 15/401, G06F 15/403

(54) **A full-text index creation, search, retrieval and display method**

(30) Priority: 02.11.1992 US 971003
(71) Applicant: MOTOROLA, INC., Schaumburg, IL 60196 (US)
(72) Inventor: Wodarz, Dennis, Fountain Hills, Arizona 85268 (US); Anderson, Howard C., Tempe, Arizona 85283 (US)
(74) Representative: Hudson, Peter David

(57) **Abstract**

A full-text method provides creation of a full-text index from words contained on one or more pages of a number of documents. A user can search the full-text index for a page of a document which contains information desired by the user. A raster image of the selected page of the document is retrieved from memory and displayed with the information requested by the user highlighted within the displayed raster image.

## Description

### Technical Field

This invention relates generally to document image searching and retrieval and, in particular, to a method for automatically creating a full-text index of information contained within a number of images and for searching the full-text index to retrieve and display a selected image with search terms highlighted in the displayed image.

### Background of the Invention

In a conventional document image retrieval system, pages of a document are scanned by a scanner to produce raster images of the document pages. The raster images are stored in memory. To retrieve a desired image from memory, it is selected by accessing and searching a database. The database contains information about the image in the form of keywords such as author, title, subject matter or any other descriptive information about the image, for example, which is manually keyed in for each of the images. Queries can only be made using database commands relating to the information that has been keyed in and not related to the complete text that appears on the image. Therefore, a user is limited in the information which can be used for searching for a desired image and may not find the desired image because the information is not available as a search keyword or the search keyword is not associated with the desired image.

Additionally, conventional document image retrieval systems are limited in that keywords cannot be highlighted within a displayed raster image. Conventional systems must convert raster images to ASCII text and display the ASCII text with keywords highlighted in the ASCII text rather than displaying the original raster image with the keywords highlighted in the raster image. Highlighting keywords in ASCII text rather than in the raster image, however, reduces the efficiency of finding keyword information within the original raster image.

In both the keyword searching and displaying of the ASCII text, conventional systems are limited because the actual document image is not linked in any way to the complete set of textual information on that image. Thus, there is a significant need within document image retrieval to link results of image analysis techniques, optical character recognition capabilities and sophisticated full-text indexing and retrieval to an actual image of a document.

### Summary of the Invention

In the present invention there is provided a method of creating a full-text index from information contained within an image. This is a significant advantage over the current technology because a user has the capabilities to search and retrieve images based on the textual information contained in the images themselves rather than information about an image.

Thus it is an advantage of the present invention to initiate search queries over all textual information contained in a number of images.

It is also an advantage of the present invention to view a quality duplicate of the original image that looks on screen just like the paper version and to highlight within the displayed raster image the search string which specifies the information requested by a user.

According to one aspect of the invention, a method is provided for finding and displaying a raster image based on a search string and for highlighting the search string within the displayed raster image. The method is executed by a computer as part of a computer program. A number of pages of different documents are scanned by a scanning system to create corresponding raster images. The raster images are stored in memory. The raster images are also converted into ASCII text files by an optical character recognition algorithm. The ASCII text files contain information about where words are located on the document page. A full-text index is created by storing the word and corresponding information about where the word appears on a page of a document. A user can perform a full-text search on the information contained in the full-text index to find and retrieve a document containing the information the user is requesting. The results of the queries allow page raster images to be displayed with individual search strings or terms highlighted based on the information retrieved from the full-text index.

### Brief Description of the Drawings

FIG. 1 shows the hardware configuration of the scanner, computer, keyboard and CRT display in accordance with a preferred embodiment of the invention.
FIG. 2 shows the hardware configuration with the full-text index builder, search and display software engines, the raster image database and full-text index database in accordance with a preferred embodiment of the invention.
FIG. 3 shows a flowchart describing the process of the full-text index builder in accordance with a preferred embodiment of the invention.
FIG. 4 shows a bounding box around the word "sky" on a page of a document.
FIG. 5 shows three bounding boxes around paragraphs on a page of a document.
FIG. 6 shows a flowchart describing the steps executed by the full-text search engine and the display engine.

### Description of the Preferred Embodiments

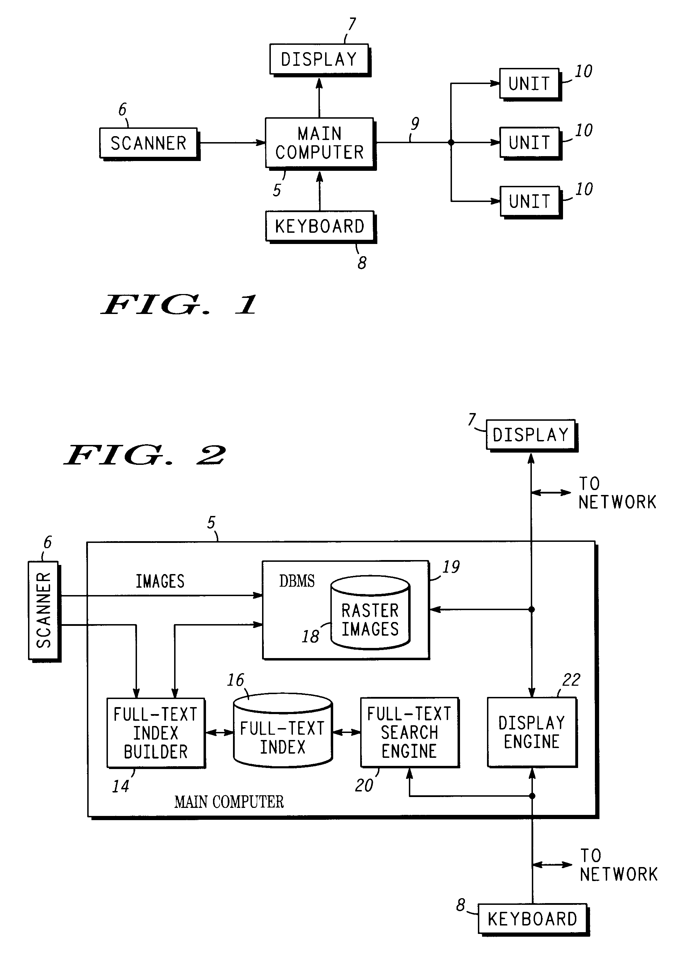

The basic configuration of the hardware is shown in FIG. 1. A main computer 5 is coupled to a scanner 6, a CRT display 7 and a keyboard 8. The main computer 5 is also connected over a network 9 to units 10, each of the units 10 comprising a computer, display and keyboard. The scanner 6, operating under the control of the main computer 5, receives a page from a document, scans the page and produces a raster image of the page. The scanner 6 executes an optical character recognition (OCR) algorithm to recognize and locate characters and words in the raster image. The result of the executed OCR algorithm is an ASCII text file which includes recognized words from the text and information about where each of the words appear in the raster image. Both the raster image and the ASCII text file are received by computer 5 where they are assigned a document ID number and a page number by main computer 5. The main computer 5 creates a full-text index from the ASCII text file. A full-text index is a list of all words within the text of an image or all words in each page of each of the documents scanned by the scanner 6. A user can than use the full-text index to find a page of a document having information which is desired by the user.

The network 9 connecting the main computer 5 to the remote or local units 10 can be an interface such as a local area network (LAN), for example. Once the full-text index is created and stored in the main memory of computer 5, a user can type in a search request at one of the units 10 for a page of a document. The search request is sent by one of the units 10 across the network 9 to main computer 5. The main computer 5 performs a search of the full-text index and retrieves a raster image of the requested document which is sent back to the user at the unit 10 transmitting the search request. The raster image of the page of a document selected by the user is displayed at the receiving unit 10. The user can also locally search the full-text index at the main computer 5 via the keyboard 8 and display the results of the search at display 7.

The computer 5 and units 10 used in this invention are commercially available SUN Sparcstatons ™ running the UNIXTM environment. The scanner 6 is also commercially available and may be manufactured by Xerox, for example. This invention will execute using most commercially available scanners, computer systems and network configurations.

FIG. 2 illustrates the interconnectivity of the hardware configuration with the software engines used in the present invention. Briefly, an index builder 14 receives delimited ASCII text files from scanner 6 and creates a full-text index 16. Raster images produced by scanner 6 are stored in memory 18 of the computer 5 using a database management system (DBMS) 19. The full text index 16 is used by full-text search engine 20 to locate a raster image based on search words entered into the computer 5 by a user via the keyboard 8. The display engine 22 locates and retrieves the raster image from memory 18 and displays the raster image on CRT display 7. The display engine 22 also highlights the search words within the displayed image by highlighting the search words only or a block of words containing the search words, such as a paragraph, for example.

As shown in FIG. 2, the database management system 19 receives raster images from scanner 6. The DBMS 19 stores each of the raster images in a database or memory 18 by assigning each of them a document ID and page number. A document ID is a unique integer that is assigned to each document as it is scanned into the system, while the page number is the page of the document which is being scanned. This information is important for retrieving a selected raster image from the database 18. The DBMS 19 used in the present invention is commercially available such as SYBASEO made by SYBASE, Inc., for example.

The index builder 14 receives from scanner 6 a delimited ASCII text file and document ID and page number from DBMS 19 as shown in FIG. 2. A separate ASCII text file can be received by the computer 5 for each separate page of a document, or multiple pages can be part of a single ASCII text file as long as each of the pages are able to be separated by the computer 5 through a page marker, for example.

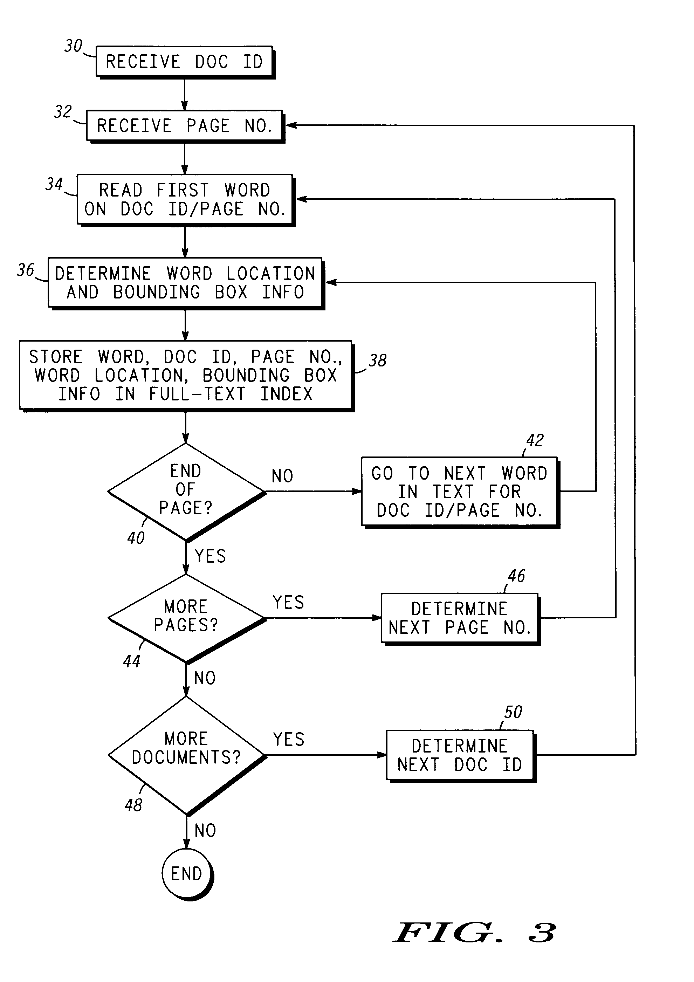

The index builder 14 builds or creates the full-text index 16 according to the flowchart shown in FIG. 3. A document ID and page number are received by the full-text index builder 14 from DBMS 19 in steps 30 and 32, respectively. The index builder 14 then reads in step 34 the first word from the ASCII text file and determines the location of the word in the raster image and dimensions of a geometric figure, such as a rectangle, for example, surrounding the word (i.e., bounding box information) in step 36.

The first word and the remaining words are received in the following preferred format for each of the words located in the text of the raster image:
word, x, y, length, width ASCII FILE FORMAT A

The "word" is an actual word appearing in the text of the raster image. X and Y designate distances from a common origin within the raster image to where a bounding box which encloses the word begins. A bounding box is a rectangle which surrounds the word. The length and width specify a distance from the X,Y point to identify the dimensions of the bounding box. This information is important for identifying within a raster image the location and dimensions of the rectangle encompassing the word which is used to highlight the word within the displayed raster image.

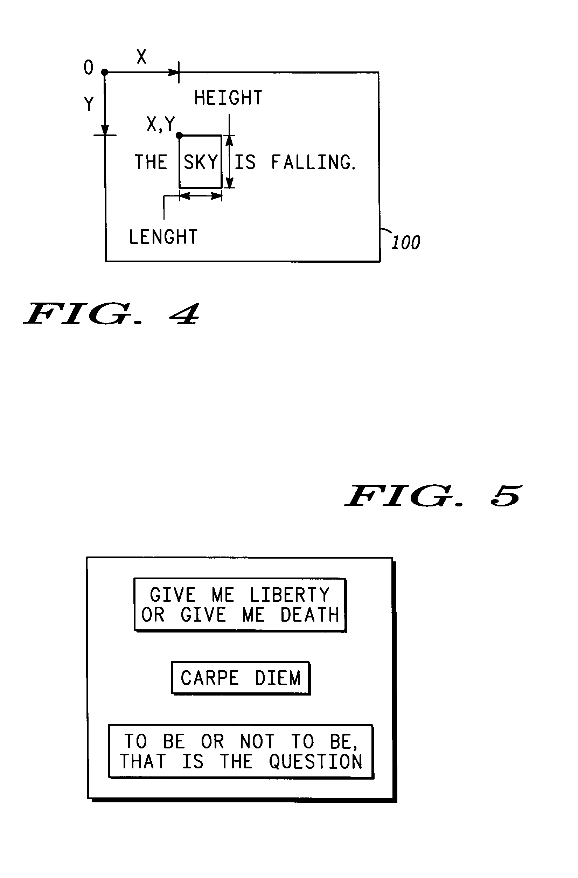

An example of a bounding box as provided by the ASCII text file is given in FIG. 4 for the word "sky" located within page 100. As shown in FIG. 4, the top left-hand corner of the bounding box surrounding "sky" is located X and Y distances from common origin point O. The common origin is usually the upper left-hand corner of each page. The dimensions of the bounding box surrounding "sky" is given as "length" and "height" from point X,Y. For the phrase, "The sky is falling.", a corresponding x, y, length and height will be provided to detail the bounding box surrounding each of the words in the sentence.

Other different types of formats besides the preferred ASCII file format A given above will work with this invention. The format depends on the output format of an optical character recognition system. For example, another file format may be the following:
word, startₓ, starty, endX, endy ASCII FILE FORMAT B

It is relatively straightforward to convert ASCII file format B into ASCII file format A. One of ordinary skill in the art can convert any of the ASCII formats received into the preferred ASCII file format A. In this example, startₓ and starty are X and Y respectively, while "length" equals endₓ minus startₓ and "height" equals endy minus starty.

Although some optical character recognition algorithms provide the locations and dimensions of a bounding box surrounding individual words, some OCR algorithms can only provide information about words on larger blocks of information, such as a sentence or paragraph, for example. FIG. 5 shows a different bounding box surrounding different paragraphs. Therefore, if a user input "liberty" as the search string, the bounding box paragraph which included "liberty" as well as the other words in the paragraph would be highlighted.

As shown in FIG. 3, once each of the words is converted into the preferred format, the document ID, page number, word and bounding box information (i.e., location of the word and dimensions of geometric figure surrounding the word) are stored in a full-text index 16 in step 38. This step 38 is the actual step which builds or creates the full-text index 16. The document ID, page number and bounding box information are fed to a commercially available full-text index software package, such as ConQuest TM, for example. Programs such as ConQuest ^{TM} provide a way to store and retrieve information from a database, in this case a full-text index database 16, without recreating the programs for performing such needed functions. The full-text index 16 is created on a word by word basis beginning with the first page of the first document until the last page of the last document. ConQuest ^{TM} stores most of the words and corresponding document ID, page number and bounding box information, but can filter any "stop words" from being stored in the full-text index 16. Stop words such as "a", "the", "and", "to", "with", for example, are terms that occur frequently in most pages of a document, would probably be worthless in trying to perform a meaningful search and are not indexed to save space.

As shown in FIG. 3, once the first word from the first page of the first document has been stored in the full-text index 16 in step 38, the index builder 14 determines whether it is at the end of the page in step 40. This is determined by looking for an end-of-page delimiter tag in the ASCII text file. If the index builder 14 is not at the end of the page, the index builder 14 advances to the next word in step 42 and executes steps 36 and 38 for the next word. Steps 40, 42, 36 and 38 will continue executing until all the words in the text of the ASCII text file for a particular page have been exhausted.

Once all the words for a particular page have been stored in the full-text index 16, the index builder 14 determines in step 44 whether there are any more pages for this particular document to be examined and stored in the full-text index database 16. The index builder 14 will receive more ASCII text files corresponding to more pages of a single document. If the index builder 14 does not receive any more ASCII text files, there are no more pages to be processed. If there are more pages for this particular document, then the index builder 14 reads the next page number from the DBMS 19 in step 46 and stores the words from the new current page into the full-text index 16 using the process describes above.

If no more pages for the particular document need to be read, the index builder 14 determines whether more documents need to be processed in step 48. This information is determined by the computer 5 from whether the scanner 6 is processing a new page for a new document. If another document needs to be processed, the index builder 14 reads in step 50 the new document ID and beginning page number in step 32 and commences the process of storing the words according to the process described above. Otherwise, the index builder 14 will stop executing in step 52 and the full-text index 16 will have been created.

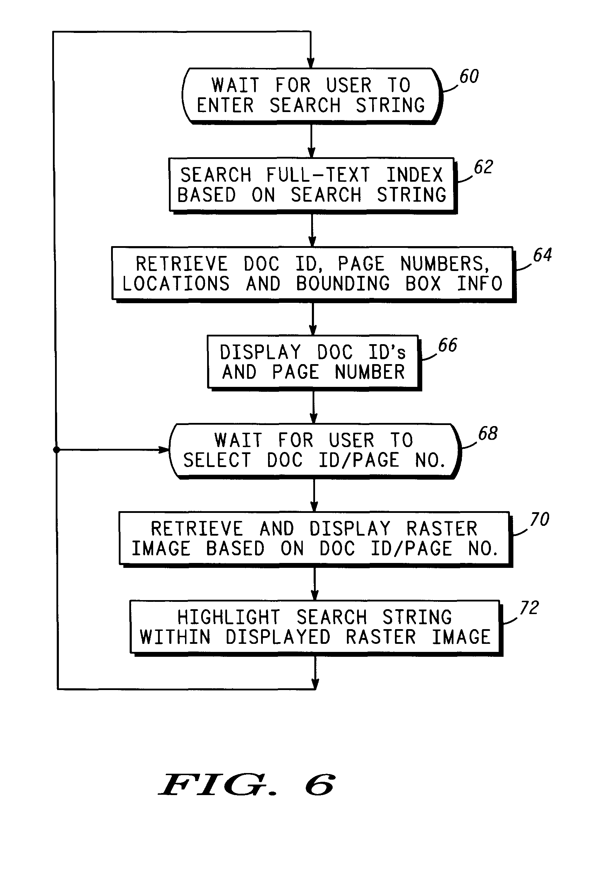

Returning to FIG. 2, once the words of the pages of a document or documents are stored and a full-text index 16 has been created, a user can initiate a search using the full-text search engine 20 to find specified information from a particular document according the steps shown in the flowchart of FIG. 6.

The flowchart shown in FIG. 6 shows the steps executed by the full-text search engine 20 and display engine 22. The computer 5 waits until a user inputs a search string via a keyboard 8 in step 60. Once the search string is entered, the computer 5 receives the input via the full-text search engine 20. The search string can comprise a single word or a plurality of words. The search string defines the search parameters which are used to find selected documents. Each of the words is fed to ConQuest ^{TM} or a similar type of full-text index search software to perform the search in step 62. Some full-text index search software, such as ConQuest^{T}"" , for example, can perform a search for synonyms, indicate what the search words mean, or find variations of the search words, such as examining for search words ending with "ing" and "s", for example. Therefore, the expansiveness of the search is dependent on the capabilities of the full-text index search software.

In step 64 of FIG. 6, the full-text search engine 20 produces a hit list of documents and pages within the document that contain the search string. The hit list is displayed in step 66 via the display engine 22 on display 7 as shown in FIG. 2. The information in the hit list comprises the document ID and the page number for each reference found by the search. The information retrieved from the full-text index 16 is used to find the raster image stored in the raster image database 18 via the DBMS 19 that corresponds to the document ID and page number. The hit lists are ordered in the manner in which they should be displayed. A document containing the most hits is displayed first while pages within the document which contain the most hits are listed and displayed first for the document.

The computer 5 waits in step 68 until a user selects a document of interest from the list of documents returned by the full-text index search engine 20 and which are displayed on display 7 via the display engine 22. Once the user selects a page of one of the documents on the hit list, the selected page is retrieved from raster image database 18 in step 70 by using the document ID and page number initially provided by DBMS 19 and the page is displayed on CRT display 7. The bounding box information retrieved from the full-text index database 16 is then used in step 72 by the display engine 22 to highlight the hits within the selected page of the document by some means such as reversing the colors of the pixels inside the bounding box, for example. Additional navigation keys on keyboard 8 are provided to move to the next hit or the previous hit. Since each hit is identified with a document ID, a page number, selected word and corresponding bounding box information, the appropriate raster image can be retrieved from the raster image database 18 and displayed with the search string highlighted within the displayed raster image.

In FIG. 6, the computer 5 returns to a wait state until the user enters a new search string in step 60 or selects another page of one the documents displayed from the hit list in step 68. Once the search string is entered or a page is selected, the computer 5 will execute the appropriate steps.

Thus, it is apparent to those skilled in the art that the present invention creates a full-text index of words contained within a number of images and permits a user to search the full-text index for images corresponding to the search string entered. Moreover, the present invention highlights the search word, words, or a block of words containing the search words when the image is displayed.

Accordingly, it is intended by the appended claims to cover all modifications of the invention which fall within the true spirit and scope of the invention.

## Claims

1. A method executed by a computer as part of a computer program for finding and displaying on a display a raster image based on a search string and for highlighting said search string within said displayed raster image, a plurality of pages of a plurality of documents being scanned by an optical character recognition system to create a raster image for each of said pages, said raster images being converted into ASCII text files by an optical character recognition algorithm, said raster images being stored in memory, said method comprising the steps of:
a) creating a full-text index comprising a plurality of words, locations of each of said words within said raster images, and dimensions of a geometric figure surrounding each of said words;
b) searching said full-text index for a raster image containing said search string;
c) retrieving said raster image from said memory;
d) displaying said raster image on said display; and
e) highlighting said search string in said raster image based on said locations and said dimensions.

2. A method executed by a computer as part of a computer program for finding and displaying on a display a raster image based on a search string and for highlighting said search string within said displayed raster image, a plurality of pages of a plurality of documents being scanned by an optical character recognition system to create a raster image for each of said pages, said raster images being converted into ASCII text files by an optical character recognition algorithm, said raster images being stored in memory, said method comprising the steps of:
a) creating a full-text index comprising a plurality of words, locations of blocks of said words within said raster images, and
dimensions of a geometric figure surrounding each of said blocks; b) searching said full-text index for a raster image containing said search string;
c) retrieving said raster image from said memory;
d) displaying said raster image on said display; and
e) highlighting a block containing said search string in said raster image based on said locations and said dimensions.

3. A method as recited in claims 1 and 2, wherein step (a) comprises the steps of:
a1) determining said locations of blocks of said words in said raster images from said ASCII text files for each page of said documents;
a2) determining said dimensions of a geometric figure for each of said blocks of said words from said ASCII text files; and
a3) storing said words, said locations and said dimensions in said full-text index.

4. A method as recited in claims 1 and 2, wherein a document ID corresponding to one of said documents and a page number corresponding to one of said pages is associated with each of said raster images and wherein step (a) comprises the step of:
a1) storing a document ID and a page number for each of said raster images in said memory and each of said words in said full text index.

5. A method as recited in claims 1 and 2, wherein step (b) comprises the steps of:
b1) retrieving a document ID and a page number of said raster image from said full-text index based on said search string; and
b2) retrieving from memory said raster image based on said document ID and said page number.

6. A method as recited in claims 1 and 2, wherein step (b) comprises the steps of:
b1) searching said full-text index for a plurality of said raster images containing said search string;
b2) displaying a list of document IDs and pages where said search string appears on said display; and
b3) retrieving from memory said raster image based on a document ID and a page selected by a user viewing said display.

7. A method as recited in claims 1 and 2, wherein said geometric figure is a rectangle.

8. A method executed by a computer as part of a computer program for finding and displaying on a display a raster image based on a desired search string and for highlighting said search string within said displayed raster image, a plurality of pages of a plurality of documents being scanned by an optical recognition system to create a raster image corresponding to each of said pages, said raster images being converted into ASCII text files by an optical character recognition algorithm, said raster images being stored in memory, a document ID corresponding to one of said documents and a page number corresponding to one of said pages being associated with each of said raster images, said method comprising the steps of:
a) determining locations of a plurality of words in said raster images from said ASCII text files for each page of said documents;
b) determining bounding box information for each of said words from said ASCII text files, said bounding box information including dimensions of a geometric figure surrounding each of said words;
c) creating a full-text index by storing each of said words and its associated location, together with said bounding box information, a document ID and a page number for each of said words;
d) searching said full-text index for raster images which contain said search string;
e) retrieving a document ID, a page number, together with said locations and bounding box information for each of said raster images found which contain said search string;
f) displaying said retrieved document IDs on said display;
g) retrieving a raster image from said memory which corresponds to a document ID and a page number selected by a user viewing said display;
h) displaying said raster image on said display; and
i) highlighting said search string in said displayed raster image based on said location and said bounding box information.
